Europäisches Patentamt

European Patent Office

Office européen des brevets

(11) Veröffentlichungsnummer: **0 204 295 B1**

# (12) EUROPÄISCHE PATENTSCHRIFT

(45) Veröffentlichungstag der Patentschrift: **31.07.91**

(21) Anmeldenummer: **86107433.4**

(22) Anmeldetag: **02.06.86**

(51) Int. Cl.5: **G01S 17/88**, G01D 5/00

(54) **Messeinrichtung zur Bestimmung der Windrichtung und Windgeschwindigkeit in der Atmosphäre.**

(30) Priorität: **05.06.85 DE 3520214**

(43) Veröffentlichungstag der Anmeldung:
**10.12.86 Patentblatt 86/50**

(45) Bekanntmachung des Hinweises auf die
Patenterteilung:
**31.07.91 Patentblatt 91/31**

(84) Benannte Vertragsstaaten:
**FR GB SE**

(56) Entgegenhaltungen:
**US-A- 3 984 685**
**US-A- 3 984 686**
**US-A- 4 359 640**

**APPLIED OPTICS, Band 24, Nr. 21, 1. November 1985, Seiten 3557-3564, New York, US; C. WERNER: "Fast sector scan and pattern recognition for a cw laser doppler anemometer"**

**Forschungsbericht DFVLR-Mitt. 79-18, "Fernmessung von Windstärke und Windrichtung mit dem Laser-Doppler-Anemometer" von F. Köpp**

**Forschungsbericht DFVLR-FB 83-11,**

**"Erstellung und Erprobung des Laser-Doppler-Anemometers zur Fernmessung des Windes" von F. Köpp, H. Herrmann, Ch. Werner, R. Schwiesow u. F. Bachstein**

(73) Patentinhaber: **Deutsche Forschungsanstalt für Luft- und Raumfahrt e.V.**
**Linder Höhe Postfach 90 60 58**
**W-5000 Köln 90(DE)**

(72) Erfinder: **Werner, Christian, Dr.**
**Dachstrasse 36**
**W-8000 München 60(DE)**
Erfinder: **Köpp, Friedrich, Dipl.-Ing.**
**Friedrichshafenerstrasse 22**
**W-8000 München(DE)**
Erfinder: **Schwiesow, Ronald, Dr.**
**1440 Alder Ave.**
**Boulder CO 80302(US)**
Erfinder: **Bachstein, Felix, Dipl.-Ing. (FH)**
**Wesendonkstrasse 22**
**W-8000 München 81(DE)**

(74) Vertreter: **von Kirschbaum, Albrecht, Dipl.-Ing.**
**Hermann-Ehlers-Strasse 21a**
**W-8034 Germering(DE)**

## Beschreibung

Die Erfindung betrifft eine Meßeinrichtung zur Bestimmung der Windrichtung und Windgeschwindigkeit in der Atmosphäre nach dem Oberbegriff des Anspruchs 1.

Von der Anmelderin wurde bereits ein Dauerstrich-Laser-Doppler-Anemometer (das im folgenden der Einfachheit halber als LD-Anemometer bezeichnet wird) für die Messungen von Windgrenzschichten entwickelt, mit welchem der Horizontalwind, und zwar dessen beide Komponenten, sowie das Windprofil bei verschiedenen Wetterbedingungen durch jeweils eine Vollscannung oder -abtastung über einen Azimutwinkel von 360° unter verschiedenen Elevationswinkeln gemessen werden (Forschungsbericht DFVLR-FB 83-11). Die mit diesem LD-Anemometer erzielten Ergebnisse wurden mit herkömmlichen Ballonsonden-Profilen beispielsweise in Höhen von mindestens 250m bis 750m und höher verglichen. Hierbei wurde festgestellt, daß die mit dem LD-Anemometer ermittelten Windprofile in den ersten 750m typischer für das durchschnittliche Windprofil sind als aus Sondenmessungen abgeleitete Profile, da das LD-Anemometer schon an sich einen räumlichen Mittelwert schafft.

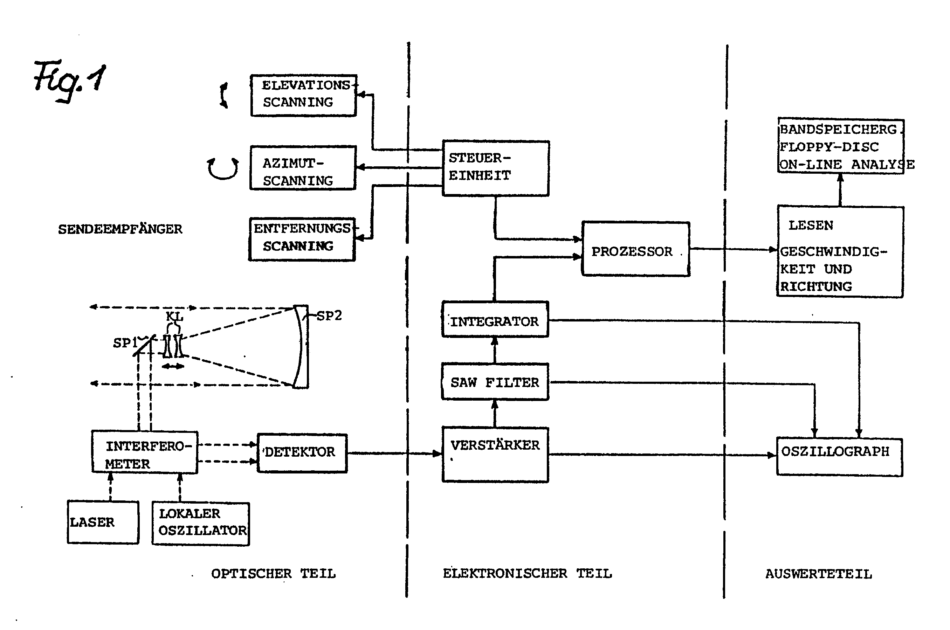

Ein Blockdiagramm eines solchen herkömmlichen in den DFVLR-Mitteilungen 79-18 veröffentlichten LD-Anemometers ist in Fig.1 dargestellt. Bei dem herkömmlichen Anemometer ist ein Sende-Empfänger mit einem Apertur-Durchmesser von 30cm und ein Abtastsystem mit zwei Spiegeln SP1 und SP2 verwendet. Für das Entfernungsscannen sind zwei Kollimatorlinsen KL vorgesehen. Das Entfernungsauflösungsvermögen beträgt bei einer auf 100m scharf eingestellten Entfernung 6m. Die Strahlung eines lokalen Oszillators und das dopplerverschobene Signal aus dem Meßvolumen werden nach Passieren eines Interferometers an einem Detektor gemischt. Zum Verarbeiten von dopplerverschobenen Signalen ist ein akustischer Oberflächenwellen-Spektrumanalysator SAW verwendet.

Ein einziges Radial-Geschwindigkeitsspektrum kann innerhalb von $50\mu s$ erhalten werden, und ein Integrator ermöglicht eine Mittelwertbildung über 50ms. Das Signal wird für ein Datenauslesen und eine -speicherung an einen Oszillographen und in einen Prozessor eingegeben.

Ein Windfeld ist wegen atmosphärischer Inhomogenitäten, insbesondere in der Nähe der Erdoberfläche, an allen Stellen einer Vollscannung für eine Geschwindigkeits-Azimut-Anzeige (was im folgenden der Einfachheit halber auch als VAD-Scannung bezeichnet wird) im allgemeinen nicht dasselbe. Es ist daher üblich, Geschwindigkeitsprofile, die aus verschiedenen Sektoren bei der Scannung gewonnen worden sind, auf Übereinstimmung zu vergleichen. Mit dem LD-Anemometer durchgeführte Messungen der Windstärke und -richtung bis zu einer Höhe von 750m, welche aus radialen Geschwindigkeitsdaten auf nur einem Teil eines vollen Azimutkreises erzeugt wurden, wurden vorzugsweise mit aus einer Vollkreisscannung gewonnenen Messungen verglichen.

Bei der Erfindung soll dieser vor allem zeitaufwendige Vergleich von aus Sektoren gewonnenen Werten mit durch eine Vollscannung erhaltenen Werten entfallen. Durch die Erfindung soll daher eine Meßeinrichtung zur Bestimmung der Windrichtung und -geschwindigkeit in der Atmosphäre geschaffen werden, mit welcher ein Windprofil auch bei einer Behinderung oder Einschränkung aufgrund von örtlichen oder räumlichen Gegebenheiten am Aufstellungsort der Meßeinrichtung mit in etwa demselben Genauigkeitsgrad wie bei einer Vollkreisscannung oder -abtastung, jedoch in einer erheblich kürzeren Zeit und damit wesentlich schneller und weniger zeitaufwendig erstellbar ist.

Gemäß der Erfindung ist dies bei einer Meßeinrichtung zur Bestimmung der Windrichtung und -geschwindigkeit in der Atmosphäre durch den Gegenstand des Anspruchs 1 erreicht.

Bei der erfindungsgemäßen Meßeinrichtung liegt beispielsweise die Meßzeit für eine Abtastung oder Scannung über einen Viertelkreissektor in der Größenordnung von 12s. Brauchbare Geschwindigkeitsabschätzungen des Windes sind aufgrund der Verwendung eines Mehrfach-Peakfinders jedoch schon bei Sektorscannungen bis zu 1/16 eines Kreises möglich, wobei vorzugsweise zusätzlich ein gewichtetes Anpassungsprogramm für die kleinsten Fehlerquadrate angewendet wird, um die Radialgeschwindigkeit gegenüber Azimutdaten zu analysieren. Der Einfluß von Wolken und Nebel auf mit der erfindungsgemäßen Meßeinrichtung durchgeführte Windmessungen ist bei den in der Praxis erhaltenen Daten offensichtlich. Dieser Einfluß kann mit Hilfe von Sichtweiten-und Wolkenhöheninformationen in Verbindung mit einer feineren Analyse des eigentlichen Geschwindigkeitsspektrums, als sie beispielsweise mit einem Einzelpeak-Finder möglich ist, sehr stark gemindert werden. Das der erfindungsgemäßen Meßeinrichtung nachgeschaltete Datensystem wurde hierbei den Anforderungen für eine Sektorscannung und hinsichtlich des verwendeten Mehrfachpeak-Finders bei Allwetterbedingungen angepaßt.

Eine modifizierte Meßeinrichtung gemäß der Erfindung ist auch für Grenzschichtuntersuchungen, für eine Verschmutzungsüberwachung, für ballistische Untersuchungen, insbesondere wenn Teile der Atmosphäre beispielsweise durch Bäume oder Hügel abgedeckt sind, verwend- und einsetzbar. Da auch auf anderen Gebieten eine Information bezüglich des Windprofils nützlich bzw. erwünscht ist, ist eine solche spezielle Anwendung der erfindungsgemäßen Meßeinrichtung das Feststellen von sogenannten Wirbelschleppen, welche von großen Flugzeugen bei der Landung erzeugt werden.

Nachfolgend wird die Erfindung anhand von bevorzugten Ausführungsformen unter Bezugnahme auf die anliegenden Zeichnungen im einzelnen erläutert. Es zeigen:

Fig.1 ein Blockdiagramm des optischen und elektronischen Teils sowie des Auswerteteils eines Dauerstrich-Doppler-Anemometers;

Fig.2a perspektivische Darstellungen von Scannungen mit einer Geschwindigkeits-Azimut-Anzeige (VAD-Anzeige) unter verschiedenen Elevationswinkeln;

Fig.2b eine Projektion auf die Erdoberfläche der in Fig.2a wiedergegebenen Scannungen;

Fig.3 ein Blockdiagramm eines schnell arbeitenden Datensystems;

Fig.4 ein Dopplerspektrum in einem digital wiedergegebenen Feld;

Fig.5 einen Computerausdruck eines Geschwindigkeitsspektrums unter einem Elevationswinkel von 30° in 350m Entfernung bei einem Azimutwinkel zwischen 310° bis 50°;

Fig.6 eine Sektorscan-Sinuswellenanpassung für drei verschiedene Höhen bei Nebel- und Wolkenbedingungen;

Fig.7 einen Aufstellungsort eines in einem Container untergebrachten LD-Anemometers auf einer Plattform in der Nordsee, wobei der Sichtsektor eingetragen ist;

Fig.8 vertikale Windprofile für eine LD-Anemometer-Sektorscanmessung, wobei ein hypothetisches, logarithmisches Windprofil zum Vergleich eingetragen ist;

Fig.9 eine Darstellung der prinzipiellen Entstehung von Wirbelschleppen bei einem landenden Flugzeug;

Fig.10a eine prinzipielle Darstellung einer Wirbelschleppenmessung mit einem LD-Anemometer;

Fig.10b eine Kurvendarstellung, in welcher die tangentiale Wirbelschleppengeschwindigkeit aufgetragen ist;

Fig.10c gleichgerichtete Wirbelschleppenprofile bei einem Homodyn-LD-Anemometer;

Fig.11 einen Computerausdruck einer Information von etwa 50 Blöcken aus einem speziellen Speicher, und

Fig.12 einen Computerausdruck einer experimentellen Wirbelschleppen-Signatur(+) und der besten Anpassung an ein theoretisches Modell (o) für dasselbe Beispiel wie in Fig.11.

Heterodyne Doppler-LD-Anemometer messen die Radialkomponente des Windes, d.h. die Geschwindigkeitskomponente entlang der Visier- oder Standlinie des LD-Anemometers. Zur Bestimmung der Größe und Richtung eines Horizontalwindes ist eine Entfernungs-, Azimut- und Elevationswinkelscannung erforderlich. Hierzu kann die mittlere Horizontalwindstärke und -richtung aus radialen Geschwindigkeitsdaten entlang horizontaler Kreise ermittelt werden, welche bezüglich der vertikalen Achse einer Abtasteinrichtung oder eines Scanners zentriert sind. Durch Ändern der Höhe der Kreise können Vertikalprofile eines Horizontalwindes gemessen werden. Diese Meßmethode wird als konische Abtastung oder Scannung bezeichnet, da der Meßstrahl einen Kegel durchläuft, dessen dessen Spitze unten in der Abtasteinrichtung liegt. Da die Daten als Funktion des Abtastazimuts aus radialen Geschwindigkeitswerten bestehen, wird das Verfahren auch als Geschwindigkeitsazimut-Anzeigescan (oder kurz als sogenannter VAD-Scan) bezeichnet.

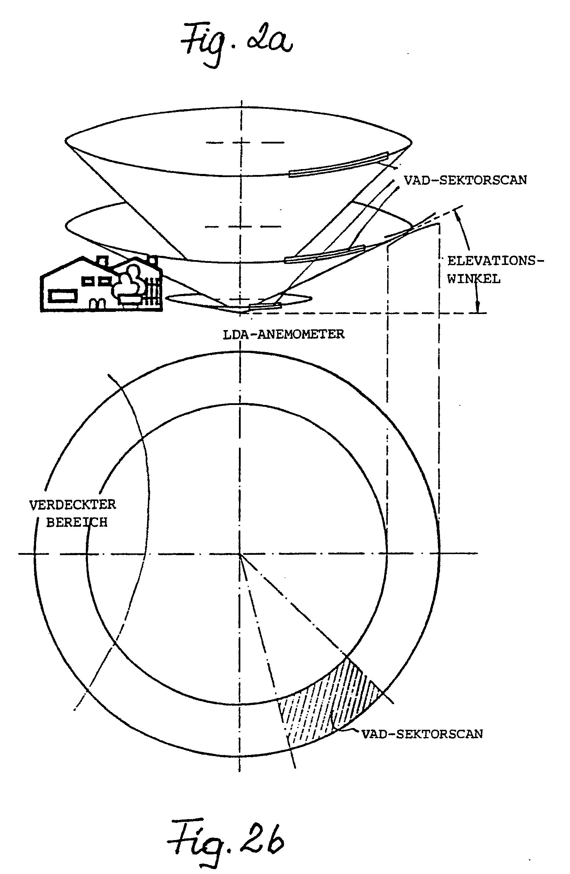

In Fig.2a sind verschiedene derartige VAD-Abtastkegel unter verschiedenen Elevationswinkeln und in verschiedenen Entfernungen dargestellt, wobei an den einzelnen Abtastkegeln durch eine Doppellinie ein sogenannter VAD-Sektorscan eingetragen ist. Gleichzeitig sind in Fig.2a Gebäude schematisch dargestellt, welche bei kleinen Elevationswinkeln ein Hindernis darstellen, in dessen Richtung nicht abgetastet werden kann. In Fig.2b ist der durch die Gebäude verdeckte Bereich bei niedrigen Elevationswinkeln durch eine dünne wellige Linie angedeutet. Ferner ist in der eine Draufsicht der Fig.2a wiedergebenden Fig.2b die Projektion einer VAD-Abtastung auf eine horizontale Ebene bezüglich der Ausdehnung des Brennvolumens, d.h. die sensitive Fläche, schraffiert dargestellt.

Wie schon erwähnt und in Fig.2a dargestellt, ist ein Scannen mit einem LD-Anemometer in gewissen Azimutbereichen beispielsweise durch Gebäude, Bäume oder auch durch Hügel u.ä. behindert, so daß nur ein Teil einer Scannung, welche dann nicht über dem LD-Anemometer zentriert ist, brauchbare Daten liefert.

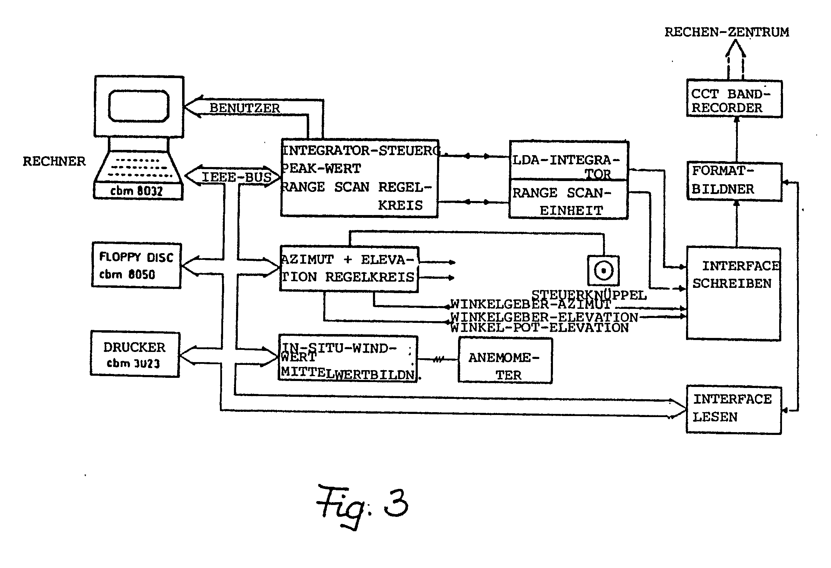

Jedoch sind auch solche Windwerte, die aus Scannungen über einem Teil eines Vollkreises abgeleitet sind, durchaus für die Windverhältnisse in diesem Abtastbereich repräsentativ, wie umfangreiche theoretische Untersuchungen und praktische Versuche der Erfinder gezeigt haben. Um jedoch ein brauchbares Abtastmuster zu realisieren, ist ein ganz spezielles Regelverfahren erforderlich; ein Blockdiagramm eines solchen Verfahrens ist in Fig.3 dargestellt.

Da in der Lasertechnik als Empfangssignale eines rückgestreuten Laserlichts sogenannte Signal-Transienten erhalten werden, die in etwa einer $1/x^2$-Funktion entsprechen und unterschiedlich viele Zielechos enthalten können, sind diese Zielechos als Signalspitzen der $1/x^2$-Funktion aufgeprägt. In den meisten praktischen Anwendungsfällen ist von Interesse, die Amplitude und die Laufzeitverzögerung der Signalspitzen im Verhältnis zum ausgesandten Laser-Lichtimpuls auf dem schnellsten Wege zu ermitteln.

Mit Hilfe der Spitzenwert-Amplitude und der Lichtlaufzeit sind der Reflexionsgrad und die Entfernung des angepeilten Ziels zu bestimmen. Zur schnellen Auswertung der interessierenden Signal-Spitzenwerte wird hierbei der empfangene Transient des Rückstreusignals auf vorkommende Maxima untersucht. Hierzu werden die Wendepunkte aller Spitzenwerte ermittelt.

Dieser Vorgang muß vom grundsätzlichen Echo-Kurvenverlauf unabhängig durchgeführt sein, d.h. eine Differentiation der Spitzenwerte bzw. der Peaks darf sich ausschließlich nur auf diese beziehen und muß den Verlauf der Transienten-Grundfunktion unberücksichtigt lassen, wobei eine solche "fließende Differentiation" im Hinblick auf hohe Verarbeitungsgeschwindigkeiten mittels digital arbeitender Einrichtungen durchgeführt werden muß.

Aus diesem Grund wird das Rückstreu- oder Echosignal mittels eines Analog-Digital-Umsetzers (ADC) digitalisiert und in einem Speicher abgelegt. Diese gewissermaßen eingefrorene Funktion kann nun punktweise ausgelesen und dem Peak-Finder zugeführt werden. In dem mit dieser Information gespeiste Peak-Finder wird ein vorhergehender Meßwert mit einem nachfolgenden verglichen und dabei wird ermittelt, ob der nachfolgende Wert größer als der vorhergehende ist. Dieser Vorgang wird solange wiederholt durchgeführt, bis der nachfolgende Meßwert kleiner wird als der vorangegangene. An diesem Punkt hält dann die Auswerte-Elektronik den Suchlauf an und ermittelt Amplitude und Laufzeit für eine Registrierung auf einem Massenspeicherungsgerät, wie beispielsweise einem Magnetband.

Diese Auswertemethode hat den Vorteil, daß nicht interessierende Teile des Echo-Signalverlaufs äußerst schnell abgetastet werden, und eine Auswertung sowie Datenermittlung und -ausgabe nur dann erfolgen, wenn eine Signalspitze aufgefunden wird, deren Amplitudengröße in der Auswertung keinerlei Rolle spielt, da das entscheidende Kriterium der Wendepunkt dieser Spitze ist. Hierbei wird dieses Verfahren auf willkürliche Signalverläufe angewendet, welche Informationen enthalten, die aufgrund ihrer Wendepunkte signifikant für eine solche beabsichtigte Auswertung sind.

Gemäß der Erfindung wurde dieses Verfahren in Verbindung mit einem Mehrfachpeak-Finder und dem eingangs beschriebenen LD-Anemometer angewendet, welches, wie ebenfalls bereits erwähnt mit einem Dauerstrich- bzw. CW-Laser arbeitet und mit welchem unter Ausnutzung des Dopplereffekts die Windgeschwindigkeit gemessen wird. Hierbei weisen die in einem Echosignal auftretenden Signalspitzen die an einer definierten (fokussierten) Meßstelle ermittelten Windgeschwindigkeiten aus.

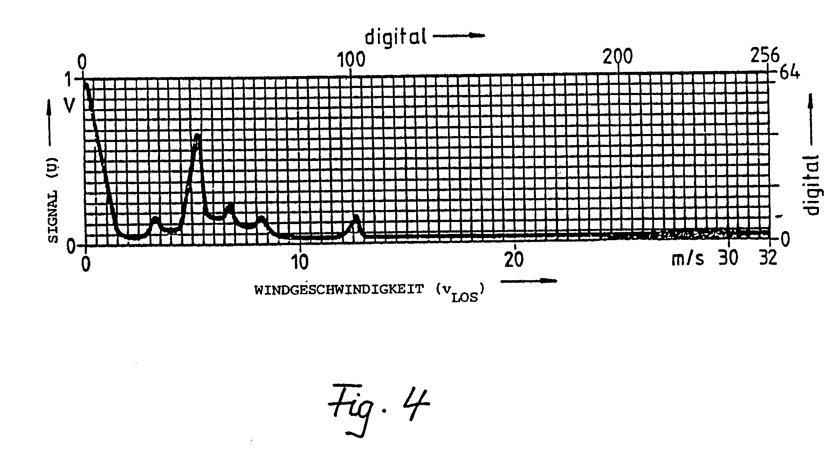

Die Auswertung betrifft in diesem Fall hauptsächlich die "Dopplerfrequenz-Verschiebung", welche der Windgeschwindigkeit proportional ist und sich in der elektronischen Bilddarstellung des Rückstreusignals hinsichtlich der Signalspitzen sehr ähnlich wie übliche LIDAR-Rückstreusignale verhält. Hierbei entspricht die Position der gemessenen Spitzenwerte auf der Zeitachse einer digitalen Aufzeichnung (siehe Fig.4) einer genau definierten Windgeschwindigkeit.

Der LD-Anemometer weist einen Mittelwertbilder auf, mit welchem es möglich ist, bis zu 1024 Frequenzspektren aufzusummieren, um dadurch das Signal/Rauschverhältnis zu verbessern.

Nach Beendigung eines solchen Mittelungsvorgangs übernimmt die Auswerteelektronik ein Spektrum und digitalisiert dieses in einem Analog-Digital-Wandler (ADC).

Das digitalisierte Signal weist für den vollen Aussteuerungsbereich, welcher auf eine Signalamplitude von 1V begrenzt ist, eine Auflösung von 6 Bit auf. In einer nachfolgenden Schaltung, welche aus zwei einen sogenannten Twin-RAM bildenden Randomspeichern besteht, werden jeweils zwei aufeinanderfolgende Werte aus dem Speicher des zuletzt erwähnten Analog-Digital-Wandlers (ADC) entnommen, in diesen Twin-RAM-Speicher zwischengespeichert und auf das Kriterium hin untersucht, ob der nachfolgende, d.h. der (n + 1)-te Wert A größer als der vorangegangene, d.h. n-te Wert B war. Ein den Twin-RAM-Speichern nachgeschalteter, digitaler Vergleicher (COMP) weist drei Entscheidungsausgänge auf, an welchen das jeweilige Verhältnis der beiden miteinander zu vergleichenden Werte in der Art anliegt, daß die folgenden drei Aussagen, nämlich Wert A größer Wert B, Wert A gleich Wert B und Wert A kleiner Wert B, entnommen werden können.

Hierbei ändert der digitale Vergleicher (COMP) seinen Wert von einer digitalen "∅" auf eine digitale "1", wenn der Wert A größer Wert B ist (A>B), und er (COMP) fällt erst in seinen "∅"- Zustand zurück, wenn der Wert A weder größer noch gleich dem Wert B ist. Somit kann dann der digitale Übergang von einer digitalen "∅" auf eine digitale "1" mittels eines elektronischen Differenziergliedes (DIFF) ermittelt werden, das bei einem Übergang des Signalausgangs von einer digitalen "∅" auf eine digitale "1" keinerlei Reaktion zeigt.

Aufgrund dieser Differentiation ergibt sich ein Impuls, mittels welchem eine Unterbrechung des Auswertezyklus eingeleitet wird und eine Übertragung der signifikanten Spitzen- oder Peakwerte, wie der Amplitude und der Zeitposition, in einen anderen Zwischen- oder Pufferspeicher (BUFF-RAM) übertragbar ist. Hierbei registriert ein mitlaufender Zähler die Anzahl der Spitzen- oder Peakwerte. Nach einer vollständigen Untersuchung des jeweils vorliegenden Spektrums auf eventuell vorkommende bzw. vorgekommene Signalspitzen erfolgt eine sogenannte kompakte Datenübertragung auf einen Massenspeicher, beispielsweise in Form eines Magnetbandes. Hierbei werden aus dem Zwischen- oder Pufferspeicher (BUFF-RAM) alle Daten in einem definierten Format ausgelesen und unter Einbeziehung weiterer wichtiger Systemdaten (dem sogenannten House-Keeping) auf dem Massenspeicher, beispielsweise in Form eines Magnetbandes, abgespeichert.

Bei einer unmittelbar anschließenden oder auch einer späteren Auswertung in einem nachgeschalteten Rechnerzentrum werden dann alle Meßsystemparameter sowie die Anzahl der auszuwertenden Signalspitzen, deren Amplituden sowie deren Spektralposition erhalten. Mit Hilfe dieses Verfahrens, das bereits während der Datenaufzeichnung sehr schnelle Vorklassifizierungsvorgänge abwickelt, ergibt sich bei der Auswertung in dem nachgeschalteten Rechnerzentrum eine erhebliche Auswertezeit-Verkürzung.

Das gesamte Meßsystem wird von einem Rechner, beispielsweise von einem CBM 8096-Computer, gesteuert; hierbei müssen Interfaces, d.h. Schnittstelleneinheiten für den Daten- und Steuerungsteil von dem Rechner, beispielsweise einem Floppy Disc CBM 8050 und einem Drucker CBM 3023 zu einem IEEE-Bus compatibel sein. Mittels Azimut-und Elevationsschleifen werden die Abtasteinrichtung bzw. der Scanner während der verschiedenen Abtast- oder Scanvorgänge gesteuert, so beispielsweise die VAD-Technik oder die Elevations-Scan-Technik. Hierbei werden alle Steuersignale beispielsweise über das Tastenfeld des Rechners in das System eingebracht.

Im Falle von VAD-Messungen mit Vollkreisscannungen werden der Elevationswinkel und die Anzahl der Azimut-Umdrehungen übertragen. Bei einer schnellen Sektorscannung wird jedoch nur ein Teil einer Umdrehung ausgenutzt, und die entsprechenden Azimutwinkel werden übertragen. Im Falle einer Elevationswinkel-Scannung, so beispielsweise bei einer Wirbelschleppen-Verfolgung, ist eine (gedachte) vertikale Abtastebene senkrecht zu der Landebahnrichtung aufzustellen. In dieser Ebene wird dann eine ausreichende Höhe zwischen der Erdoberfläche und den erwarteten Wirbelschleppen durch eine schnelle Elevationswinkelabtastung überdeckt. Der obere und untere Elevationswinkel sowie die Abtastgeschwindigkeit können durch Eingeben an dem Tastenfeld des verwendeten Computers entsprechend gewählt werden. Danach läuft die Elevationswinkelabtastung automatisch ab.

In Fig.4 ist ein typisches Spektrum eines Spektrum-Analysators wiedergegeben; hierbei ist auf der Ordinate die Signalspannung (U in Volt) und auf der Abszisse die Windgeschwindigkeit ($v_{LOS}$ in m/s) aufgetragen. Parallel zu der Abszisse und der Ordinate sind am oberen bzw. rechten Rand die entsprechenden Digitalwerte angegeben. Hierbei dient der in dem Blockdiagramm der Fig.3 dargestellte Integrator des LD-Anemometers als Datenquelle; dieser Integrator erzeugt Frequenzspektren, welche über auswählbare Zeitabschnitte von 1,6 bis 52ms gemittelt sind und die Windinformation enthalten. Insbesondere entspricht die Peak-Position in dem Spektrum der Größe der radialen Windkomponenten innerhalb und außerhalb des Meßvolumens. Die Nebel und Wolken betreffenden Komponenten haben ihren Ursprung außerhalb des Meßvolumens.

Um die zu übertragende Datenmenge zu reduzieren, werden nur die Peak-Werte jedes Spektrums verwendet. Eine spezielle Schnittstelleneinrichtung bzw. ein entsprechendes Interface wählt die Peak-Position mit Hilfe des vorstehend beschriebenen, digitalen Differenzierverfahrens in Amplituden- und Geschwindigkeitskanälen aus.

Die Amplitude der Windpeaks hängt hierbei von den Streuteilchen in Beziehung zu der scharf eingestellten Entfernung ab. Die als Interface "Schreiben" bezeichnete Schnittstelleneinrichtung in Fig.3 wählt die Information aus der Entfernungs-, Elevations- und Azimutposition sowie aus der Winkelinformation in Datenblöcken aus und schreibt alle 50ms einen kompletten Block über einen Formatbildner in einen Bandrecorder, beispielsweise des Typs Kennedy 8000 CCT Taperecorder. Hierbei enthält der jeweilige Blockkopf die Meßentfernung sowie die Anzahl der Peaks. (In Fig.4 sind es beispielsweise 6 Peaks). Der Block selbst enthält die Amplitude sowie die radiale Windgeschwindigkeit jedes Peaks. Auf diese Weise können 188 Peaks festgestellt werden. Bei Verwendung des erfindungsgemäßen LD-Anemometers kann, da es sich um ein homodynes System handelt, das Vorzeichen ( + oder -) der Radialgeschwindigkeit nicht bestimmt werden. Der erste, in Fig.4 dargestellte Peak ist der starke (hier nicht interessierende) Nullfrequenz-Spektralpeak.

Bei einer Meßcampagne können die ermittelten Daten mit Hilfe eines zusätzlichen, in Fig.3 dargestellten Interface "Lesen" von demselben Computer aus untersucht werden, der zum Schreiben der Daten verwendet wird. Diese Maßnahme ist notwendig, um ganz sicher zu gehen, daß auch alle erfaßten Daten richtig ermittelt und eingegeben sind. Ferner kann der Pegel der einzelnen Peaks, d.h. deren Amplitude, durch eine Rauschpegelunterdrückung noch optimiert werden.

Um die Einsatz- und Verwendungsmöglichkeiten der erfindungsgemäßen Meßeinrichtung aufzuzeigen, werden nachstehend drei Beispiele beschrieben, bei welchen eine schnelle Sektorabtastung besonders vorteilhaft ist, und zwar

a) bei der Ermittlung von Mehrfach-Windpeaks, welche durch Wolken- und/oder Nebelechos hervorgerufen sind,

b) bei einem Aufstellungsort, bei welchem der Meßbereich, d.h. das visuelle Segment, sehr begrenzt ist, und

c) bei einer Wirbelschleppenerkennung.

Das benutzte Datensystem kann jede Sekunde 20 Blöcke speichern und besitzt eine Azimutwinkelauflösung von $1°$, was eine minimale Abtastgeschwindigkeit von $20°$ pro Sekunde bedeutet.

(a) Ermittlung von Mehrfach-Windpeaks

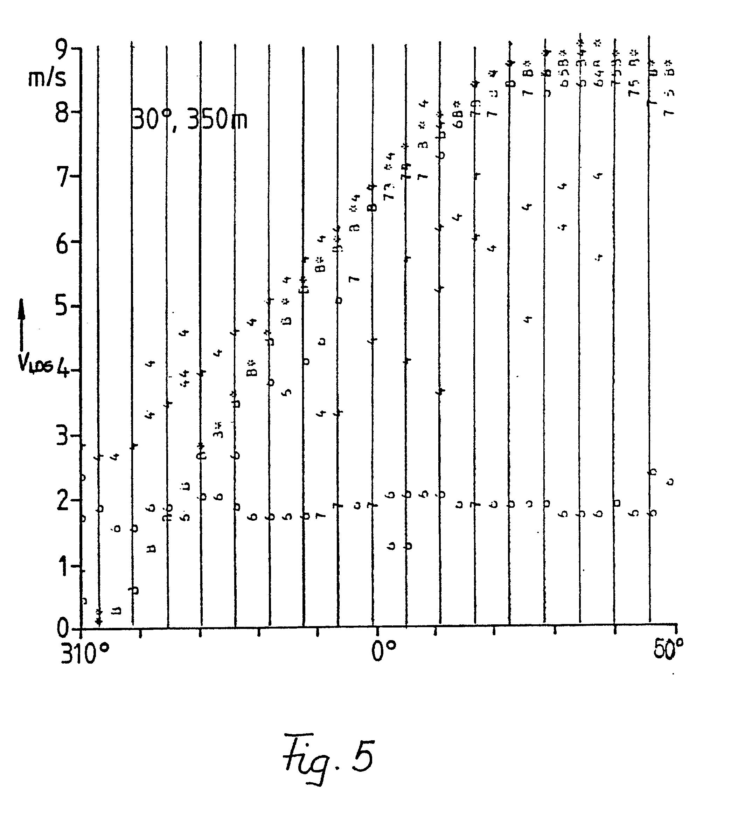

Bei der Ermittlung von Mehrfach-Windpeaks ist der Einfluß von Wolken und Nebel auf Windmessungen mit einem $CO_2$-Dauerstrich-Laser-Doppler-Anemometer bekannt und in der Literatur beschrieben. Außer dem Windpeak aus dem fokussierten Meßvolumen stammen einige andere Peaks von Wolken oder Nebel außerhalb des fokussierten Bereichs. Wenn in der Azimutrichtung abgetastet wird, unterscheiden sich diese Peaks in ihrem Phasen- und Geschwindigkeitsverhalten von den aus dem Meßvolumen stammenden Peaks. In Fig.5 ist ein Beispiel eines Ausdruckergebnisses eines Rechners bei einer schnellen Abtastung über einen Bereich von etwa $90°$ wiedergegeben. Hierbei entsprechen in Fig.5 die wiedergegebenen Zahlen der digitalisierten Signalamplitude und ihre Lage der (aus Fig.4 entnehmbaren) Sichtlinien-Geschwindigkeit. In Fig.5 ist ein Sektor von etwas mehr als $90°$ dargestellt und der Buchstabe "B" ist ein Wert für eine der mit der Zahl 6 bezeichneten Kurve entsprechenden Sinus-Ausbildung.

In Fig.5 sind ferner konstante Peakpositionen, welche durch das System hervorgerufen sind, sowie einige zusätzliche Rauschpeaks zu erkennen. Hierbei liegt der Amplitudenwert von 2 nahe bei dem Rauschpegel. Die gleichgerichtete Sinuswelle gibt das Windsignal (Werte 4 bis 7) wieder, woraus die Azimutabhängigkeit der Sichtliniengeschwindigkeit zu entnehmen ist, aus der Geschwindigkeit und Richtung des Windfeldes berechnet werden können. Die Spalte am Anfang der Kurvendarstellung gibt die Azimut-, Elevations- und Entfernungs-Information für jeden Block wieder; die in Fig.5 dargestellte Messung wurde unter einem Elevationswinkel von $30°$ mit einem Fokussierbereich von 700m bei einem Azimutwinkel von $70°$ bis $172°$ zur Systemachse durchgeführt.

Die Berechnung beginnt vorzugsweise mit der Eingabe des ausgewählten Azimutwinkelbereichs, in welchem die Berechnung gültig ist. Bereiche, wo Hindernisse, Masten usw. die Messung stören, werden nicht berücksichtigt. Ferner wird die mittlere, durchschnittliche Windrichtung in den Computer eingegeben, um die tatsächliche Windrichtung herauszufinden. Hierbei ist der Winkel der Achse der Meßeinrichtung zu der Nordrichtung notwendig, um auf diese Weise die Windrichtung korrigieren zu können. Ferner müssen einige Filtervorgänge durchgeführt werden. Hierbei verringert der Rauschpegel (beispielsweise $\leq 2$) die Anzahl der gültigen, brauchbaren Peaks. Für jede Intensität wird eine Matrix (A) eingerichtet ($x_3 = 0$). Bei dem nächsten Schritt werden große Abweichungen von einer Sinuslinie in Betracht gezogen, wobei Werte mit sehr großen Abweichungen abgetrennt und gleich null gesetzt werden. Nach Durchführung dieser Schritte ist die Bedingung $x_3 = 0$ nicht mehr länger gültig. Es wird dann mit der Berechnung begonnen. In Fig.5 ist eine Sinuslinie des Intensitätswerts 6 dargestellt, welcher mit dem Buchstaben B bezeichnet ist. Da dieser Wert B sehr gut zu dem Sinusverlauf paßt, ist hieraus zu ersehen, daß die mit dem Intensitätswert 4 bezeichnete Kurve eine andere Phase, aber nahezu dieselbe Geschwindigkeit hat.

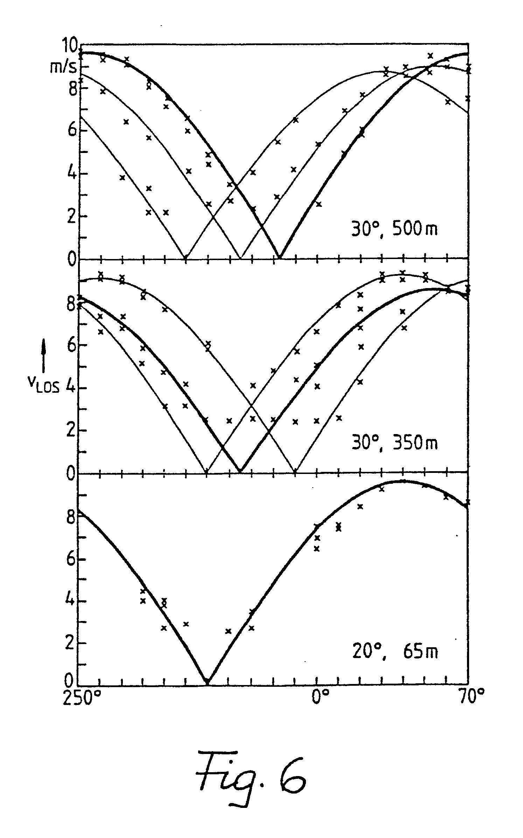

In Fig.6 ist ein Teil der Computerarbeit für drei verschiedene Höhen wiedergegeben. Hierbei ist in den drei Kurven die auf der Ordinate aufgetragene Sichtliniengeschwindigkeit $v_{LOS}$ über dem auf der Abszisse aufgetragenen Azimutwinkel in $10°$-Intervallen dargestellt. Die in den Diagrammen eingetragenen Kreuze stellen jeweils einen gültigen Peak ohne nähere Amplitudeninformation dar. Die Aufzeichnungen wurden von einem Computer erstellt, wobei der schlechteste Fall für mit dem LD-Anemometer durchgeführte Windmessungen dargestellt ist, da am Boden eine Staubschicht und in einer Höhe von 850m eine Wolkenschicht vorlagen.

Das Verfahren, um eine Mehrfachpeak-Information zu behandeln, ist ebenfalls in Fig.6 dargestellt. Wenn bei der Messung von der ersten, nahe dem Erdboden liegenden Schicht aus zu größeren Höhen hin begonnen wird, und die Information Staub oder kein Staub bzw. Wolke oder keine Wolke in den Computer eingegeben wird, kann der Computer die Information wie ein zusätzliches Filter behandeln. In dem Computerausdruck der Fig.5 stammen die "Sterne" von der Staubschichtinformation (bezüglich Geschwindigkeit und Richtung) und diese Werte, welche durch die "Sterne" gekennzeichnet sind, passen sehr gut zu der der Intensität 6 entsprechenden Kurve oder der Anpassung B.

(b) Messungen innerhalb begrenzter Sichtsegmente

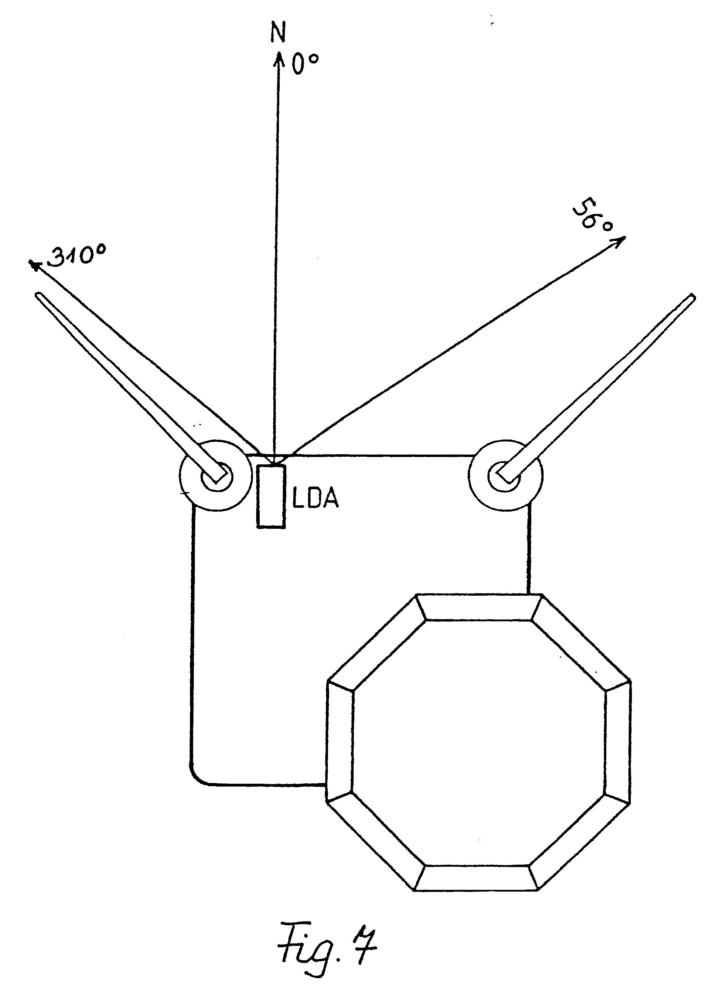

Oft kann von dem Aufstellungsort einer Meßanordnung nur in einen begrenzten Sektor des Himmels "gesehen" werden. Mit der erfindungsgemäßen Meßeinrichtung kann ein Windvektor für die Grenzschicht erhalten werden. Beispielsweise soll das Windprofil über See von einer schwimmenden Plattform aus erhalten werden. In einem praktischen, in Fig.7 skizzierten Fall, mußte eine Messung von einer Stelle aus durchgeführt werden, hinter welcher Masten und Krane standen, und eine Helikopter-Landeplattform lag. Der Sichtsektor auf das Meer in Nordrichtung betrug annähernd 120°. In Fig.7 ist das mögliche, zur Verfügung stehende Blickfeld durch die Azimutwinkelangaben 310° bis 56° eingezeichnet.

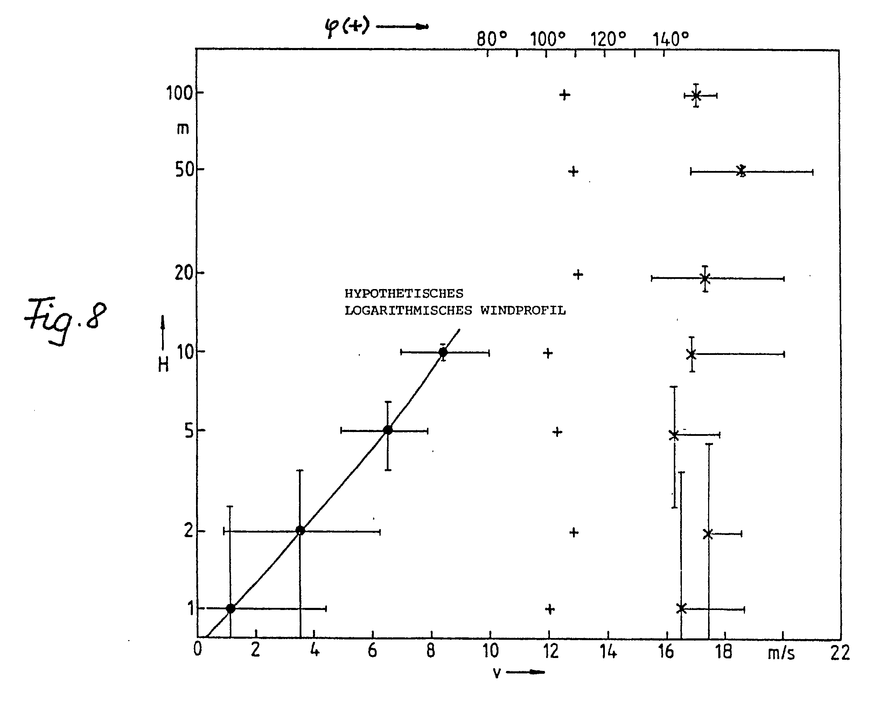

In Fig.8 ist das gemessene Windprofil in zwei Entfernungen, nämlich 175m und 250m von der Plattform aus in Höhen von 0m bis 100m über der Meeresoberfläche gemessen. Das gemessene Windprofil in 175m Entfernung ist mit Fehlerstrichen hinsichtlich der Höhenauflösung und der Windabweichung dargestellt. Es ergibt sich kein gemessenes logarithmisches Windprofil, sondern nur die Turbulenz nimmt in Richtung der Meeresoberfläche zu. In Fig.8 ist im linken unteren Teil noch ein hypothetisches Windprofil eingetragen, welches aus vorherigen Messungen bekannt war. Die Meßrichtung lag im Lee der Plattform. Wenn der Wind aus der Nordrichtung bläst, hat dies keinen Einfluß auf größere Entfernungen.

(c) Wirbelschleppenmuster-Erkennung

Wie bereits eingangs erwähnt, erzeugen große Flugzeuge beim Landen sehr starke Wirbelschleppen, welche eine Gefahr für nachfolgende, insbesondere kleinere Flugzeuge darstellen können. Da das Wirbelschleppenproblem einen mehr oder weniger großen Einfluß auf die Kapazität großer Flugplätze, insbesondere auf den Betrieb auf parallel verlaufenden Landebahnen, haben kann, ist die Kenntnis des Weges der sich bildenden Wirbelschleppen von großer Wichtigkeit.

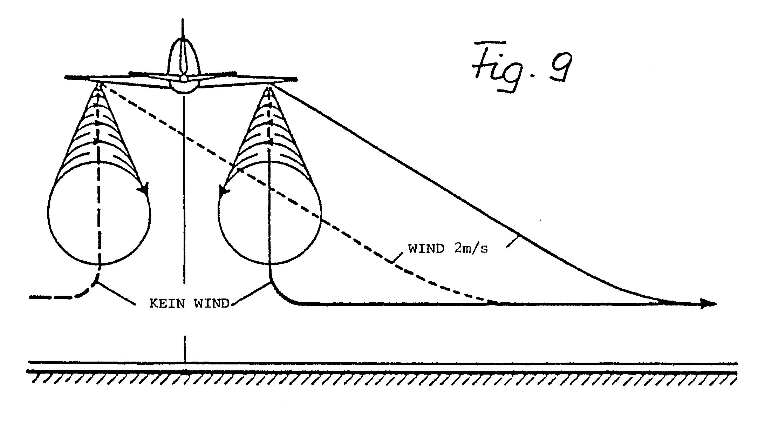

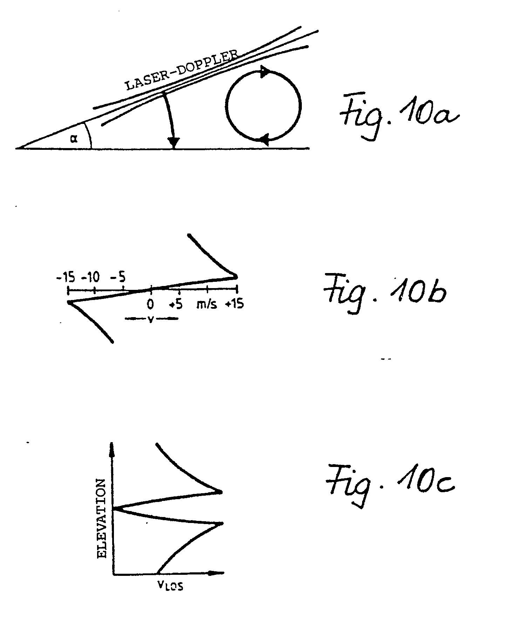

Die Entstehung und die Ausbildung von Wirbelschleppen sind in Fig.9 schematisch und in Fig.10a bis c anhand von Kurven wiedergegeben. Ein landendes Großflugzeug erzeugt ein Paar Wirbelschleppen. Bei einem Cross- oder Querwind von 0 oder 2m/s sind die theoretischen Ausbreitungskurven für die rechte Schleppe durch ausgezogene Linien und für die linke Schleppe durch gestrichelte Linien wiedergegeben.

Eine vertikale, gedachte Abtastebene ist senkrecht zu der Landebahnrichtung festgelegt. In dieser Ebene wird eine ausreichende Höhe zwischen der Oberfläche und der zu erwartenden Wirbelschleppe durch eine schnelle Elevationsabtastung überdeckt. Ein entsprechender Winkelbereich von beispielsweise 0° bis 30° und eine Abtastgeschwindigkeit von beispielsweise 10 bis 20°/s kann durch Eingehen in ein Tastenfeld gewählt werden. Danach läuft dann die Elevationswinkelabtastung automatisch ab.

Um das theoretisch bekannte Wirbelschleppenverhalten in der Praxis zu untersuchen, wurde ein LD-Anemometer versuchsweise am Flughafen Frankfurt zwischen den Landebahnen 25L und 25R installiert. Hierbei betrug der Abstand von den Lande-Startbahnen etwa 260m. Ferner wurde dasselbe LD-Anemometer zwei Wochen lang an dem sogenannten "Gehspitz" aufgestellt, welcher 5km außerhalb des Flughafens unter dem Gleitbahnende der Landebahn 25L liegt.

In Fig.10a und 10b ist der Scanablauf dargestellt. Ein Programm-Scanablauf beginnt mit einer schnellen Elevationsabtastung, beispielsweise zwischen 2 bis 20° und 18°/s und bei einer Entfernungseinstellung auf 260m. Bei Passieren eines Flugzeugs erscheint ein Wirbelschleppensignal auf dem Monitor. Eine näher bei dem LD-Anemometer liegende Wirbelschleppe wird durch eine manuell gesteuerte Entfernungsverringerung verfolgt. Wenn die Wirbelschleppenposition näher als 100m ist, wird die Azimutrichtung um 180° geändert, und die Elevationsscannung wird auf der entgegengesetzten Seite des LD-Anemometers fortgesetzt. Wenn nun die Wirbelschleppe wiederum das Abtastvolumen erreicht, wird es nunmehr durch Vergrößern der Entfernung verfolgt, bis sie sich zerstreut. Ein solches Meßprogramm kann mehrere Minuten dauern.

Die Frequenzspektren an dem LD-Anemometerausgang enthalten die Information bezüglich der Geschwindigkeitsverteilung in dem Meßvolumen. Normalerweise gibt es einen Peak, welcher der Radialkomponente des Windvektors (siehe Fig.4) entspricht. Sobald eine Wirbelschleppe in das Abtastvolumen eintritt, wird der Windpeak kleiner oder verschwindet, und es erscheint eine komplexe Signalstruktur. Aus der Lage der hochfrequenten Flanke kann die maximale Tangentialgeschwindigkeit in der Wirbelschleppe abgeleitet werden. In Fig.10c ist die vereinfachte Signatur oder Zeitfolge wiedergegeben.

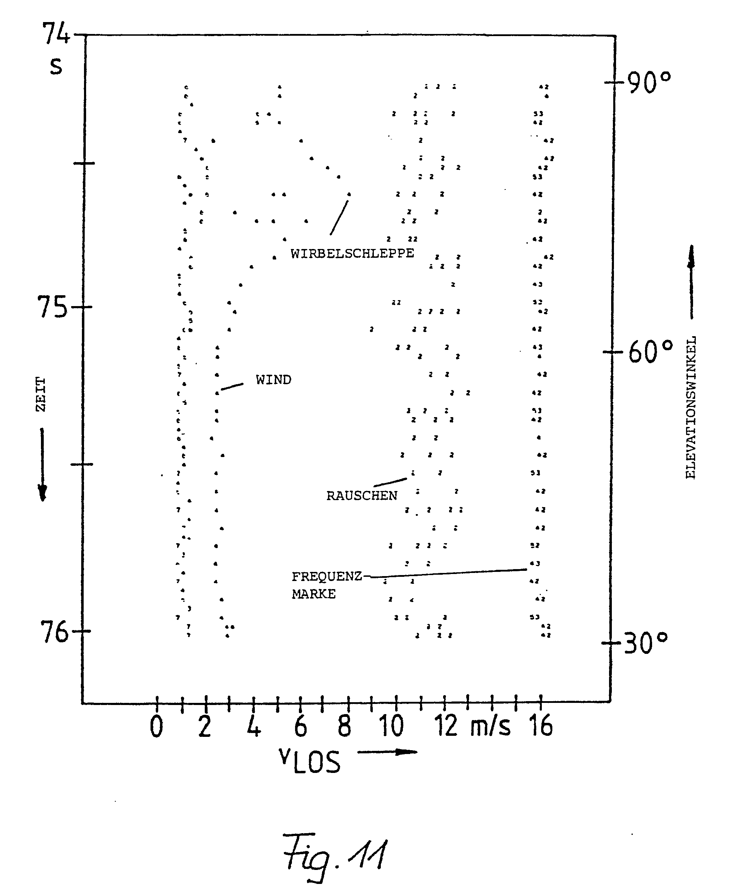

In Fig.11 ist ein Computerausdruck von zwei Scansekunden wiedergegeben. Hierbei sind in Fig. 11 in Ordinatenrichtung links die Zeit bzw. rechts der Elevationswinkel und auf der Abszisse die Sichtliniengeschwindigkeit $v_{LOS}$ aufgetragen. Die Zeit ist bei einem Flugzeugvorbeiflug gestartet worden, und die Elevationswinkelabtastung wurde zwischen 30° bis 90° eingestellt. Die Scandauer betrug 2s. Eine Wirbelschleppe wurde nahe bei 90° (von dem Aufstellungsort "Gehspitz" aus) gemessen, und die Wirbelschleppengeschwindigkeit lag nahe bei 8m/s. Aufgrund der homodynen Laser-Doppler-Methode ergibt sich kein Richtungsvorzeichen. Es wird lediglich der Ge-schwindigkeitswert gemessen. Das Vorzeichen der Wirbelschleppen-Geschwindigkeit kann aus der Kenntnis der normalen Windgeschwindigkeit und deren Richtung gewonnen werden.

In Fig.11 sind zwei verschiedene maximale Windgeschwindigkeiten $v_{LOS}$, nämlich eine nahe bei dem Elevationswinkel von 70° und eine nahe bei dem Elevationswinkel von 80°, mit einem Minimum dazwischen eingetragen. Das Minimum ist die Stelle, wo sich das Vorzeichen ändert (d.h. durch Null geht). Die beiden maximalen Geschwindigkeiten unterscheiden sich deutlich von dem normalen, dort herrschenden Wind. Der normale Wind wird in Windrichtung zu der Wirbelschleppenkomponente addiert und entgegen der Windrichtung von der anderen Komponente subtrahiert.

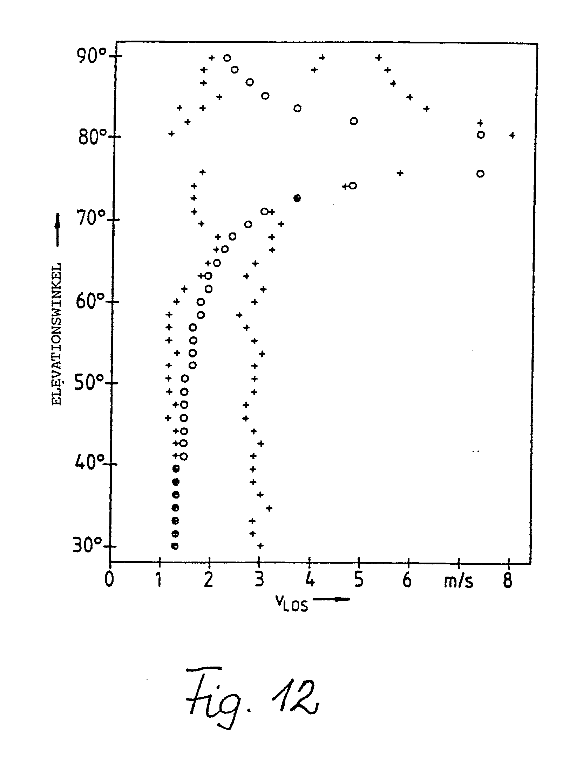

In Fig.12 ist ein weiterer Computerausdruck für das gleiche, in Fig.11 wiedergegebene Beispiel dargestellt. Hierbei sind die Wind- und Wirbelschleppen-Peakwerte als Pluszeichen (+) ausgedruckt. Die beste Anpassung bezüglich eines theoretischen Modells ist in Form von Kreisen (o) ausgedruckt. Die mittlere Geschwindigkeit ist hierbei bereits subtrahiert, so daß die beiden Wirbelschleppenpeaks dieselbe Geschwindigkeit aufweisen. Mit Hilfe eines solchen Mustererkennungsablaufs ist es möglich, eine Wirbelschleppen-Entwicklung zu bestimmen. Hierbei kann für jede Abtastung genau der Ort des Wirbelschleppenzentrums bestimmt und festgelegt werden. Mit Hilfe zusätzlicher Daten, wie dem Winkelwert und der Entfernung, kann der Computer die Höhe des Wirbelschleppenzentrums gegenüber der Entfernung von der Mittellinie und die maximale Tangentialgeschwindigkeit über der Entfernung auftragen. Hierdurch kann dann der Einfluß von auf der einen Landebahn landenden Flugzeuge bezüglich des Verkehrs auf einer oder oder mehreren parallelen Landebahnen eingeschätzt werden.

## Patentansprüche

1.  Meßeinrichtung zur Bestimmung der Windrichtung und Windgeschwindigkeit in der Atmosphäre mittels eines Laser-Doppler-Anemometers mit einer Abtasteinrichtung zur Erstellung eines Vertikalprofils eines Horizontalwindes mit Hilfe einer Azimutabtastung in jeweils einem horizontalen Kreis einer Reihe von Kreisen in verschiedenen Höhen, welche bezüglich der vertikalen Achse der Abtasteinrichtung zentriert sind, dadurch **gekennzeichnet,** daß bei der Azimutabtastung nur Meßwerte aus einem Sektor von etwa 100° und weniger einem Mehrfach-Peakfinder zugeführt sind, in welchem Mehrfach-Peakfinder

a) eine maximale Amplitude jedes digitalisierten Signals durch Verfolgung immer mehrerer Frequenzmaxima bestimmt wird, indem jeweils ein vorangehendes gemessenes Maximum mit einem nachfolgenden, gemessenen Maximum solange verglichen wird, bis das nachfolgende gemessene Maximum kleiner als das vorangehende gemessene Maximum ist, und

b) aus dem Signalmaximum die Dopplerfrequenz-Verschiebung ausgewertet und der Azimut des Signalmaximums bestimmt wird.

## Claims

1.  Measuring device for determining the wind direction and wind speed in the atmosphere by means of a Laser-Doppler anemometer with a scanning means for forming a vertical profile of a horizontal wind by means of an azimuth scanning in each horizontal circle of a series of circles of different height which are centered with respect to the vertical axis of the scanning means characterized in that only measured values from a sector of about 100° and less are fed to a multiple-peak finder, in said multiple peak-finder

a) the maximum amplitude of each digitalized signal being determined by tracing always several frequency maximums by comparing a preceding measured maximum value with a following measured maximum value until the following measured maximum value is less than the preceding measured maximum value; and

b) the Doppler frequency shift being evaluated from said signal maximum and the azimuth of said signal maximum being determined.

## Revendications

1.  Dispositif de mesure destiné à déterminer la direction et la vitesse du vent dans l'atmosphère au moyen d'un anémomètre Doppler au laser avec un dispositif de balayage pour l'établissement d'un profil vertical d'un vent horizontal à l'aide d'un balayage azimutal dans chaque fois un cercle horizontal d'une série de cercles de différentes hauteurs qui sont centrés par rapport à l'axe vertical du dispositif de balayage, caractérisé en ce que pour le balayage azimutal on n'introduit que les valeurs de mesure provenant d'un secteur d'environ 100° et inférieur à 100°, à un détecteur de valeurs de pointe multiples, détecteur de valeurs de pointe multiples dans lequel

a) une amplitude maximale de chaque signal numérisé est déterminée par la poursuite de chaque fois plusieurs maxima de fréquence, tandis que l'on compare à chaque fois un maximum mesuré en premier lieu avec un maximum mesuré consécutivement tant que le maximum mesuré consécutivement est inférieur au maximum mesuré préalablement, et

b) à partir du maximum de signal, on évalue le décalage de fréquence Doppler et l'on détermine l'azimut du maximum de signal.

# Fig.1

ELEVATIONS-
SCANNING

AZIMUT-
SCANNING

ENTFERNUNGS-
SCANNING

SENDEEMPFÄNGER

STEUER-
EINHEIT

BANDSPEICHERG.
FLOPPY-DISC
ON-LINE ANALYSE

LESEN

GESCHWINDIG-
KEIT UND
RICHTUNG

PROZESSOR

INTEGRATOR

SP2

KL

SP1

SAW FILTER

INTERFERO-
METER

DETEKTOR

VERSTÄRKER

OSZILLOGRAPH

LASER

LOKALER
OSZILLATOR

OPTISCHER TEIL

ELEKTRONISCHER TEIL

AUSWERTETEIL

EP 0 204 295 B1

## Fig. 2a

VAD—SEKTORSCAN

ELEVATIONS-
WINKEL

LDA—ANEMOMETER

VERDECKTER
BEREICH

VAD—SEKTORSCAN

## Fig. 2b

Fig. 3

Fig. 4

Fig. 5

Fig. 6

Fig. 7

Fig.8

HYPOTHETISCHES
LOGARITHMISCHES WINDPROFIL

EP 0 204 295 B1

Fig. 9

WIND 2m/s

KEIN WIND

Fig. 10a

Fig. 10b

Fig. 10c

Fig. 11

Fig. 12

21